(19) **Europäisches Patentamt European Patent Office Office européen des brevets**

(11) **EP 3 627 738 B1**

(12) **EUROPEAN PATENT SPECIFICATION**

(45) Date of publication and mention of the grant of the patent:
**22.10.2025 Bulletin 2025/43**

(21) Application number: **18801334.6**

(22) Date of filing: **16.05.2018**

(51) International Patent Classification (IPC):
**H04B 7/0456** *(2017.01)* **H04B 7/06** *(2006.01)*
**H04L 25/02** *(2006.01)* **H04B 7/0417** *(2017.01)*
**H04L 1/16** *(2023.01)*

(52) Cooperative Patent Classification (CPC):
**H04B 7/0469; H04B 7/0417; H04B 7/06;**
**H04B 7/0619; H04L 1/16;** H04L 25/0224

(86) International application number:
**PCT/CN2018/087143**

(87) International publication number:
**WO 2018/210276 (22.11.2018 Gazette 2018/47)**

(54) **FLOW GENERATION METHOD AND APPARATUS FOR A TDD COMMUNICATION SYSTEM, AND COMPUTER-READABLE STORAGE MEDIUM**

**VERFAHREN UND VORRICHTUNG ZUR STROMERZEUGUNG FÜR EIN TDD-KOMMUNIKATIONSSYSTEM UND COMPUTERLESBARES SPEICHERMEDIUM**

**PROCÉDÉ ET APPAREIL DE GÉNÉRATION DE FLUX POUR SYSTÈME DE COMMUNICATION DRT, ET SUPPORT DE STOCKAGE LISIBLE PAR ORDINATEUR**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2017 CN 201710348288**

(43) Date of publication of application:
**25.03.2020 Bulletin 2020/13**

(73) Proprietor: **ZTE Corporation Shenzhen, Guangdong 518057 (CN)**

(72) Inventors:
- **AI, Xingxing**
  **Shenzhen**
  **Guangdong 518057 (CN)**
- **XU, Ying**
  **Shenzhen**
  **Guangdong 518057 (CN)**
- **WANG, Meiying**
  **Shenzhen**
  **Guangdong 518057 (CN)**
- **LI, Zeng**
  **Shenzhen**
  **Guangdong 518057 (CN)**

(74) Representative: **Aipex B.V.**
**Vestdijk 51**
**5611 CA Eindhoven (NL)**

(56) References cited:
CN-A- 102 035 615    CN-A- 103 634 068
CN-A- 104 272 611    US-A1- 2014 146 904

- **CMCC: "Further evaluations of UE-specific beamformed CSI-RS", vol. RAN WG1, no. Beijing, China; 20150824 - 20150828, 23 August 2015 (2015-08-23), XP051001630, Retrieved from the Internet <URL:http://www.3gpp.org/ftp/ Meetings_3GPP_SYNC/RAN1/Docs/> [retrieved on 20150823]**
- **HUAWEI ET AL: "Discussion on reciprocity based CSI acquisition mechanism", vol. RAN WG1, no. Hangzhou, China; 20170515 - 20170519, 14 May 2017 (2017-05-14), XP051273333, Retrieved from the Internet <URL:http://www.3gpp.org/ftp/ Meetings_3GPP_SYNC/RAN1/Docs/> [retrieved on 20170514]**

- CMCC: "Considerations on hybrid non-precoded CSI-RS and beamformed CSI-RS", vol. RAN WG1, no. Nanjing, China; 20160523 - 20160527, 13 May 2016 (2016-05-13), XP051096844, Retrieved from the Internet <URL:http://www.3gpp.org/ftp/tsg_ran/WG1_RL1/TSGR1_85/Docs/> [retrieved on 20160513]
- SAMSUNG: "Discussions on tradeoff of CSI-RS and feedback enhancement", vol. RAN WG1, no. Fukuoka, Japan; 20150525 - 20150529, 15 May 2015 (2015-05-15), XP050969675, Retrieved from the Internet <URL:http://www.3gpp.org/ftp/tsg_ran/WG1_RL1/TSGR1_81/Docs/> [retrieved on 20150515]
- ZTE: "Non-Constant Modulus Beamforming based on Class B CSI reporting", vol. RAN WG1, no. Malmö, Sweden; 20151005 - 20151009, 4 October 2015 (2015-10-04), XP051002230, Retrieved from the Internet <URL:http://www.3gpp.org/ftp/Meetings_3GPP_SYNC/RAN1/Docs/> [retrieved on 20151004]

**EP 3 627 738 B1**

**Description**

**TECHNICAL FIELD**

The present disclosure relates to the field of communications and, for example, to a flow generation method and apparatus for a time division duplex (TDD) communication system, and a computer-readable storage medium.

**BACKGROUND**

The multi-antenna technology is a great breakthrough in the field of wireless communications, also called the multiple-input multiple-output (MIMO) technology. The MIMO technology can improve a capacity and spectrum utilization of a communication system without increasing a bandwidth, and improve channel reliability and reduce a bit error rate without increasing transmit power of the whole system, which is a technology adopted by the new generation mobile communication system.

An MIMO system adopts multi-antenna transceiving at both a transmit end and a receive end, and the MIMO technology includes the diversity technology and the multiplexing technology. The diversity technology uses multiple copies of a signal to experience different fading to the receive end, and a probability that all the copies are in deep fading at the same time is low, thereby increasing reliability of the system. The multiplexing technology uses a degree of freedom of a channel to transmit different signals, thereby increasing the channel capacity and improving system performance. The multiplexing technology includes single-user multiple-input multiple-output (SU-MIMO) and multi-user multiple-input multiple-output (MU-MIMO). The SU-MIMO means that a single user transmits multi-stream data, and the MU-MIMO means that different users adopt the multi-antenna technology and transmit a multi-stream signal at the same time. Although the multiplexing technology can greatly improve a capacity of a user equipment (UE), the transmit and the receive ends have requirements for the number of antennas. For example, a terminal only supporting uplink single-antenna transmission is a non-polling terminal, and a terminal supporting uplink dual-antenna transmission is a polling terminal. Therefore, whether the closed-loop or open-loop precoding technology is used, there will be limitation: the closed-loop precoding technology in the non-polling terminal is limited by the fact that a position of the UE cannot be known, such that only wide beam coverage can be adopted, channel precoding matrix indicator (PMI) information fed back is matched with the wide beam, and no array antenna shaping gain exists; the open loop technology generally needs to use the principle of channel uplink and downlink reciprocity, and the non-polling terminal can only obtain a channel state of a main set via uplink, such that downlink SU-MIMO cannot be supported. A technical literature CMCC: "Further evaluations of UE-specific beamformed CSI-RS", 3GPP DRAFT; R1-154302, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX; FRANCE, vol. RAN WG1, no. Beijing, China; 20150824-20150828 23 August 2015 (2015-08-23), XP051001630. A technical literature HUAWEI ET AL: "Discussion on reciprocity based CSI acquisition mechanism", 3GPP DRAFT; R1-1708137, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX; FRANCE, vol. RAN WG1, no. Hangzhou, China; 20170515-20170519 14 May 2017 (2017-05-14), XP051273333. A technical literature CMCC: "Considerations on hybrid non-precoded CSI-RS and beamformed CSI-RS", 3GPP DRAFT; R1-164880, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX; FRANCE, vol. RAN WG1, no. Nanjing, China; 20160523-20161527 13 May 2016 (2016-05-13), XP051096844. A technical literature SAMSUNG: "Discussions on tradeoff of CSI-RS and feedback enhancement", 3GPP DRAFT; R1-152882 FD-MIMO CSI ENHANCEMENT, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX; FRANCE, vol. RAN WG1, no. Fukuoka, Japan; 20150525-20150529 15 May 2015 (2015-05-15), XP050969675. A technical literature ZTE: "Non-Constant Modulus Beamforming based on Class B CSI reporting", 3GPP DRAFT; R1-155271 NON-CONSTANT MODULUS BEAMFORMING BASED ON CLASS B CSI REPORTING, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX; FRANCE, vol. RAN WG1, no. Malmo, Sweden; 20151005-20151009 04 October 2015 (2015-05-15), XP051002230.

The present application provides a flow generation method and apparatus for a TDD communication system and a computer-readable storage medium, so as to overcome the defect that an evolved node B (eNodeB) cannot set an array antenna forming gain based on closed-loop precoding or cannot perform downlink SU-MIMO based on open-loop precoding.

The present application provides a flow generation method for a TDD communication according to independent claim 1.

The present application further provides a flow generation apparatus for a time TDD communication according to independent claim 3.

The present application further provides a computer-readable storage medium. The computer-readable storage

3

medium is configured to store one or more programs executable by one or more processors to implement the flow generation method for a TDD communication system described above.

In the flow generation method and apparatus for a TDD communication system and the computer-readable storage medium provided by the present application, based on the non-polling terminal, by adopting a forming CSI-RS and in conjunction with the open-loop and close-loop technology, the high-rate and precisely-forming SU-MIMO which approximates SU-MIMO performance of a polling terminal is implemented.

## BRIEF DESCRIPTION OF DRAWINGS

FIG. 1 is a flowchart of a flow generation method for a TDD communication system according to an embodiment of the present application;

FIG. 2 is a flowchart of a flow generation method for a TDD communication system according to another embodiment of the present application;

FIG. 3 is a structural diagram of a flow generation apparatus for a TDD communication system according to an embodiment of the present application; and

FIG. 4 is a structural diagram of a flow generation method for a TDD communication system according to another embodiment of the present application.

## DETAILED DESCRIPTION

To further elaborate on the technical means adopted for achieving predetermined purposes and the effects achieved in the present application, the present application is described below in conjunction with the drawings and embodiments.

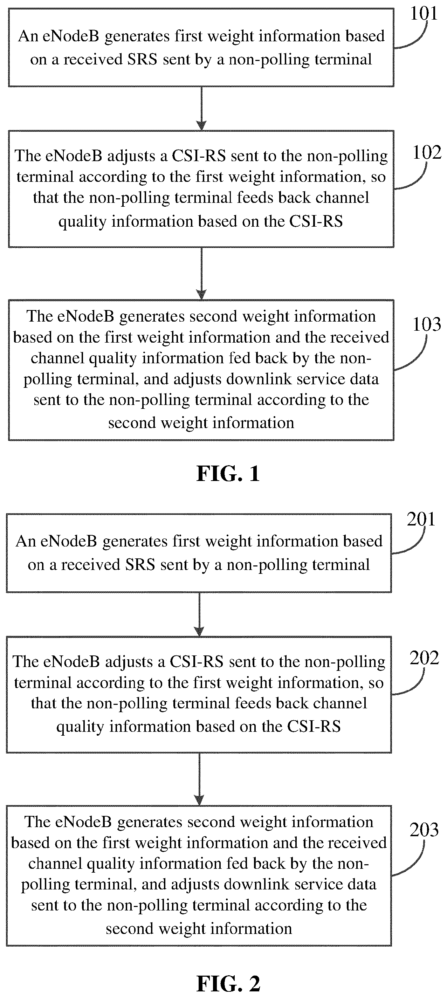

A first embodiment of the present application provides a flow generation method for a TDD communication system. The method is applied in a TDD communication system, and as shown in FIG. 1, the method includes steps 101, 102 and 103.

In step 101, an eNodeB generates first weight information based on a received SRS sent by a non-polling terminal.

Where the non-polling terminal is a user terminal having only one uplink antenna to send data.

In an embodiment, the step 101 includes steps as follows: the eNodeB generates uplink channel state information based on the received SRS sent by the non-polling terminal via a main antenna; and the eNodeB generates the first weight information based on the uplink channel state information.

In step 102, the eNodeB adjusts a CSI-RS sent to the non-polling terminal according to the first weight information so that the non-polling terminal feeds back channel quality information based on the CSI-RS.

In an embodiment, the step 102 includes steps as follows: the eNodeB weights the CSI-RS sent to the non-polling terminal via the first weight information so that the non-polling terminal to feed the channel quality information based on the CSI-RS.

In an embodiment, the channel quality information includes, but is not limited to, PMI information.

In step 103, the eNodeB generates second weight information based on the first weight information and the received channel quality information fed back by the non-polling terminal, and adjusts downlink service data sent to the non-polling terminal according to the second weight information.

In an embodiment, the step 103 includes steps as follows: the eNodeB generates the second weight information for adjusting the downlink service data based on the first weight information and the received PMI information fed back by the non-polling terminal; and the eNodeB weights the downlink service data sent to the non-polling terminal via the second weight information.

Through the flow generation method for a TDD communication system provided by this embodiment, based on the non-polling terminal, by adopting a forming CSI-RS and in conjunction with the open-loop and close-loop technology, the high-rate and precisely-forming SU-MIMO is implemented, effectively improving SU-MIMO performance of the non-polling terminal to approximate SU-MIMO performance of a polling terminal.

A second embodiment of the present application provides a flow generation method for a TDD communication system. The method is applied in a TDD communication system, and as shown in FIG. 2, includes steps 201, 202 and 203.

In step 201, an eNodeB generates first weight information based on a received SRS sent by a non-polling terminal.

Where the non-polling terminal is a user terminal having only one uplink antenna to send data.

In an embodiment, the step 201 includes steps as follows: the eNodeB generates uplink channel state information based on the received SRS sent by the non-polling terminal via a main antenna. In an embodiment, the uplink channel state information is H; and the eNodeB sets the first weight information to w based on the uplink channel state information H.

Where w = $H^H$, and the $H^H$ is a Hermite matrix of the uplink channel state information H.

In an embodiment, the step 201 includes steps as follows: the eNodeB generates uplink channel state information based on the received SRS sent by the non-polling terminal via a main antenna, where the uplink channel state information is H; and the eNodeB generates a steering vector Sv(theta, phi) of the uplink channel state information H and sets the first weight information to w based on the uplink channel state information H. Where w = Sv(theta, phi)$^H$, and the Sv(theta, phi)$^H$ is a Hermite matrix of the steering vector Sv(theta, phi).

In step 202, the eNodeB adjusts a CSI-RS sent to the non-polling terminal according to the first weight information, so that the non-polling terminal feeds back channel quality information based on the CSI-RS.

In an embodiment, the step 202 includes steps as follows: the eNodeB weights the CSI-RS sent to the non-polling terminal via the first weight information, so that the non-polling terminal feeds back the channel quality information based on the CSI-RS.

In an embodiment, the channel quality information includes, but is not limited to, PMI information.

In step 203, the eNodeB generates second weight information based on the first weight information and the received channel quality information fed back by the non-polling terminal, and adjusts downlink service data sent to the non-polling terminal according to the second weight information.

In an embodiment, the step 203 includes steps as follows: the eNodeB generates the second weight information $w_{Pdsch}$ for adjusting the downlink service data based on the first weight information w and the received PMI information fed back by the non-polling terminal; and the eNodeB weights the downlink service data sent to the non-polling terminal via the second weight information $w_{Pdsch}$.

Where $w_{Pdsch} = \mathrm{kron}\left(\mathrm{ones}\left(\frac{M}{\mathrm{PortNum}_{csi-rs}}\right), \mathrm{PMI}_i\right) .* w$, M is the number of antennas in the eNodeB, $\mathrm{PortNum}_{csi\text{-}rs}$ is the number of ports for transmitting the CSI-RS, $\mathrm{PMI}_i$ is a PMI column vector fed back by an i-th flow of the non-polling terminal, where i is a positive integer. Wherein $\mathrm{ones}\left(\frac{M}{\mathrm{PortNum}_{csi-rs}}\right)$ is a column vector of $\frac{M}{\mathrm{PortNum}_{csi-rs}}$, $\mathrm{kron}\left(\mathrm{ones}\left(\frac{M}{\mathrm{PortNum}_{csi-rs}}\right), \mathrm{PMI}_i\right)$ is a Kronecker product of $\mathrm{ones}\left(\frac{M}{\mathrm{PortNum}_{csi-rs}}\right)$ and $\mathrm{PMI}_i$, and $\mathrm{kron}\left(\mathrm{ones}\left(\frac{M}{\mathrm{PortNum}_{csi-rs}}\right), \mathrm{PMI}_i\right) .* w$ is a multiplication of $\mathrm{kron}\left(\mathrm{ones}\left(\frac{M}{\mathrm{PortNum}_{csi-rs}}\right), \mathrm{PMI}_i\right)$ and an element of a corresponding position in a matrix w.

Through the flow generation method for a TDD communication system provided by the second embodiment of the present application, based on the non-polling terminal, by adopting a forming CSI-RS and in conjunction with the open-loop and close-loop technology, the high-rate and precisely-forming SU-MIMO is implemented, effectively improving SU-MIMO performance of the non-polling terminal to approximate SU-MIMO performance of a polling terminal.

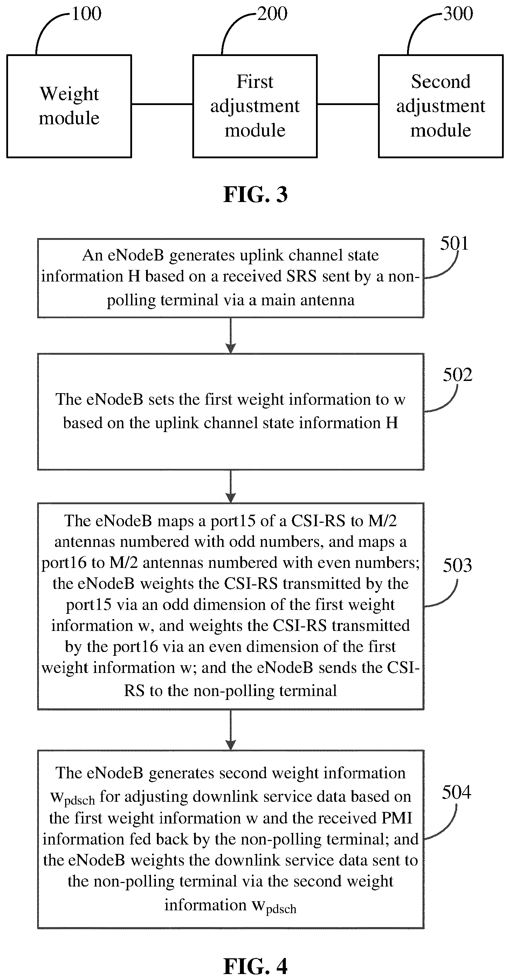

A third embodiment of the present application provides a flow generation apparatus for a TDD communication system. The apparatus is configured in an eNodeB in a TDD communication system, and as shown in FIG. 3, includes a weight module 100, a first adjustment module 200 and a second adjustment module 300.

The weight module 100 is configured to generate first weight information based on a received SRS sent by a non-polling terminal, where the non-polling terminal is a user terminal having only one uplink antenna to send data.

In an embodiment, the weight module 100 is configured to: generate uplink channel state information based on the received SRS sent by the non-polling terminal via a main antenna; and generate the first weight information based on the uplink channel state information.

The first adjustment module 200 is configured to adjust a CSI-RS sent to the non-polling terminal according to the first weight information so that the non-polling terminal feeds back channel quality information based on the CSI-RS.

In an embodiment, the first adjustment module 200 is configured to: weight the CSI-RS sent to the non-polling terminal via the first weight information so that the non-polling terminal to feed the channel quality information based on the CSI-RS.

In an embodiment, the channel quality information includes, but is not limited to, PMI information.

The second adjustment module 300 is configured to generate second weight information based on the first weight information and the received channel quality information fed back by the non-polling terminal, and adjust downlink service data sent to the non-polling terminal according to the second weight information.

In an embodiment, the second adjustment module 300 is configured to: generate the second weight information for adjusting the downlink service data based on the first weight information and the received PMI information fed back by the non-polling terminal; and weight the downlink service data sent to the non-polling terminal via the second weight information.

Through the flow generation apparatus for a TDD communication system provided by the third embodiment of the present application, based on the non-polling terminal, by adopting a forming CSI-RS and in conjunction with the open-loop and close-loop technology, the high-rate and precisely-forming SU-MIMO is implemented, effectively improving SU-MIMO performance of the non-polling terminal to approximate SU-MIMO performance of a polling terminal.

A fourth embodiment of the present invention provides a flow generation apparatus for a TDD communication system. The apparatus provided by this embodiment is configured in an eNodeB in a TDD communication system, and as shown in FIG. 3, includes a weight module 100, a first adjustment module 200 and a second adjustment module 300.

The weight module 100 is configured to generate first weight information based on a received SRS sent by a non-polling terminal, where the non-polling terminal is a user terminal having only one uplink antenna to send data.

In an embodiment, the weight module 100 is configured to: generate uplink channel state information based on the received SRS sent by the non-polling terminal via a main antenna; where the uplink channel state information is H; and set the first weight information to w based on the uplink channel state information H. Where w = $H^H$, and the $H^H$ is a Hermite matrix of the uplink channel state information H.

In an embodiment, the weight module 100 is configured to: generate uplink channel state information based on the received SRS sent by the non-polling terminal via a main antenna, where the uplink channel state information is H; and generate a steering vector Sv(theta, phi) of the uplink channel state information H and sets the first weight information to w based on the uplink channel state information H. Where w = Sv(theta, phi)$^H$, and Sv(theta, phi)$^H$ is a Hermite matrix of the steering vector Sv(theta, phi).

The first adjustment module 200 is configured to adjust a CSI-RS sent to the non-polling terminal according to the first weight information so that the non-polling terminal feeds back channel quality information based on the CSI-RS.

In an embodiment, the first adjustment module 200 is configured to: weight the CSI-RS sent to the non-polling terminal via the first weight information so that the non-polling terminal to feed the channel quality information based on the CSI-RS.

In an embodiment, the channel quality information includes, but is not limited to, PMI information.

The second adjustment module 300 is configured to generate second weight information based on the first weight information and the received channel quality information fed back by the non-polling terminal, and adjust downlink service data sent to the non-polling terminal according to the second weight information.

In an embodiment, the second adjustment module 300 is configured to: generate the second weight information $w_{Pdsch}$ for adjusting the downlink service data based on the first weight information w and the received PMI information fed back by the non-polling terminal; and weight the downlink service data sent to the non-polling terminal via the second weight information $w_{Pdsch}$.

Where $w_{Pdsch} = \mathrm{kron}\left(\mathrm{ones}\left(\frac{M}{\mathrm{PortNum}_{csi-rs}}\right), \mathrm{PMI_i}\right) .* w$, M is the number of antennas in the eNodeB, $\mathrm{PortNum}_{csi-rs}$ is the number of ports for transmitting the CSI-RS, $\mathrm{PMI_i}$ is a PMI column vector fed back by an i-th flow of the non-polling terminal, where i is a positive integer. Where $\mathrm{ones}\left(\frac{M}{\mathrm{PortNum}_{csi-rs}}\right)$ is a column vector of $\frac{M}{\mathrm{PortNum}_{csi-rs}}$, $\mathrm{kron}\left(\mathrm{ones}\left(\frac{M}{\mathrm{PortNum}_{csi-rs}}\right), \mathrm{PMI_i}\right)$ is a Kronecker product of $\mathrm{ones}\left(\frac{M}{\mathrm{PortNum}_{csi-rs}}\right)$ and $\mathrm{PMI_i}$, and $\mathrm{kron}\left(\mathrm{ones}\left(\frac{M}{\mathrm{PortNum}_{csi-rs}}\right), \mathrm{PMI_i}\right) .* w$ is a multiplication of $\mathrm{kron}\left(\mathrm{ones}\left(\frac{M}{\mathrm{PortNum}_{csi-rs}}\right), \mathrm{PMI_i}\right)$ and an element of a corresponding position in a matrix w.

Through the flow generation apparatus for a TDD communication system provided by the fourth embodiment of the present application, based on the non-polling terminal, by adopting a forming CSI-RS and in conjunction with the open-loop and close-loop technology, the high-rate and precisely-forming SU-MIMO is implemented, effectively improving SU-MIMO performance of the non-polling terminal to approximate SU-MIMO performance of a polling terminal.

A fifth embodiment of the present application provides a flow generation method for a TDD communication system. The method is applied in a TDD communication system, and as shown in FIG. 4, includes steps 501, 502, 503 and 504.

In step 501, an eNodeB generates uplink channel state information H based on a received SRS sent by a non-polling terminal via a main antenna.

In step 502, the eNodeB sets the first weight information to w based on the uplink channel state information H.

In an embodiment, w = $H^H$, and the $H^H$ is a Hermite matrix of the uplink channel state information; or, w = Sv(theta, phi)$^H$.

Sv(theta, phi) is a steering vector of the uplink channel state information H generated by the eNodeB based on the uplink channel state information H, and Sv(theta, phi)$^H$ is a Hermite matrix of the steering vector Sv(theta, phi).

In step 503, the eNodeB maps a port15 of a CSI-RS to M/2 antennas numbered with odd numbers, and maps a port16 to M/2 antennas numbered with even numbers; the eNodeB weights the CSI-RS transmitted by the port15 via an odd dimension of the first weight information w, and weights the CSI-RS transmitted by the port16 via an even dimension of the first weight information w; and the eNodeB sends the CSI-RS to the non-polling terminal so that the non-polling terminal to feed PMI information based on the CSI-RS.

In step 540, the eNodeB generates second weight information $w_{\text{Pdsch}}$ for adjusting downlink service data based on the first weight information w and the received PMI information fed back by the non-polling terminal; and the eNodeB weights the downlink service data sent to the non-polling terminal via the second weight information $w_{\text{Pdsch}}$;

Where $w_{\text{Pdsch}} = \text{kron}\left(\text{ones}\left(\frac{M}{\text{PortNum}_{\text{csi-rs}}}\right), \text{PMI}_i\right) .* w$ , M is the number of antennas in the eNodeB, $\text{PortNum}_{\text{csi-rs}}$ is the number of ports for transmitting the CSI-RS, $\text{PMI}_i$ is a PMI column vector fed back by an i-th flow of the non-polling terminal, where i is a positive integer.

Where $\text{ones}\left(\frac{M}{\text{PortNum}_{\text{csi-rs}}}\right)$ is a column vector of $\frac{M}{\text{PortNum}_{\text{csi-rs}}}$ ,

$\text{kron}\left(\text{ones}\left(\frac{M}{\text{PortNum}_{\text{csi-rs}}}\right), \text{PMI}_i\right)$ is a Kronecker product of $\text{ones}\left(\frac{M}{\text{PortNum}_{\text{csi-rs}}}\right)$ and $\text{PMI}_i$ and

$\text{kron}\left(\text{ones}\left(\frac{M}{\text{PortNum}_{\text{csi-rs}}}\right), \text{PMI}_i\right) .* w$ is a multiplication of $\text{kron}\left(\text{ones}\left(\frac{M}{\text{PortNum}_{\text{csi-rs}}}\right), \text{PMI}_i\right)$ and an element of a corresponding position in a matrix w.

Through the flow generation method for a TDD communication system provided by the fifth embodiment of the present application, based on the non-polling terminal, by adopting a forming CSI-RS and in conjunction with the open-loop and close-loop technology, the high-rate and precisely-forming SU-MIMO is implemented, effectively improving SU-MIMO performance of the non-polling terminal to approximate SU-MIMO performance of a polling terminal.

A sixth embodiment of the present application further provides a computer-readable storage medium.

The computer storage medium may be a random access memory (RAM), a flash memory, a read only memory (ROM), an erasable programmable ROM (EPROM), an electrically EPROM (EEPROM), a register, a hard disk, a mobile hard disk, a CD-ROM or any other form of storage medium that known in the art.

The computer-readable storage medium stores one or more programs executable by one or more processors to implement part of all of steps in any one of the first, the second and the fifth embodiments of the present application.

Through the description of the specific embodiments, a more thorough and specific understanding of the technical means adopted for achieving predetermined purposes and the effects achieved in the present application should be formed, but the drawings are merely intended to provide references and explanations and are not intended to limit the application.

## INDUSTRIAL APPLICABILITY

In the present disclosure, based on the non-polling terminal, by adopting a forming CSI-RS and in conjunction with the open-loop and close-loop technology, the high-rate and precisely-forming SU-MIMO is implemented, effectively improving SU-MIMO performance of the non-polling terminal to approximate SU-MIMO performance of a polling terminal.

## Claims

1. A flow generation method for a time division duplex, TDD, communication system, comprising:

   generating (101), by an evolved node B, eNodeB, first weight information based on a received sounding reference signal, SRS, sent by a non-polling terminal, wherein the non-polling terminal is a user terminal having only one uplink antenna to send data;
   adjusting (102), by the eNodeB, a channel state indicator information reference signal, CSI-RS, sent to the non-polling terminal according to the first weight information, so that the non-polling terminal feeds back channel quality information based on the CSI-RS; and
   generating, by the eNodeB, second weight information based on the first weight information and the received channel quality information fed back by the non-polling terminal, and adjusting downlink service data sent to the non-polling terminal according to the second weight information;
   wherein the channel quality information is precoding matrix indicator, PMI, information;

wherein the generating, by the eNodeB, the first weight information based on the received SRS sent by the non-polling terminal comprises:

> generating, by the eNodeB, uplink channel state information based on the received SRS sent by the non-polling terminal via a main antenna; and
> generating, by the eNodeB, the first weight information based on the uplink channel state information;
> wherein the uplink channel state information is H; and
> wherein the generating, by the eNodeB, the first weight information based on the uplink channel state information comprises:
>
> > generating, by the eNodeB, a steering vector Sv(theta, phi) of the uplink channel state information H and setting the first weight information to w based on the uplink channel state information H,
> > wherein w = Sv(theta, phi)$^H$, and the Sv(theta, phi)$^H$ is a Hermite matrix of the steering vector Sv(theta, phi);
> > **characterized in that**, the generating, by the eNodeB, the second weight information based on the first weight information and the received channel quality information fed back by the non-polling terminal, and adjusting the downlink service data sent to the non-polling terminal according to the second weight information comprises:
> >
> > > generating, by the eNodeB, the second weight information $w_{Pdsch}$ for adjusting the downlink service data based on the first weight information $w$ and the received PMI information fed back by the non-polling terminal; and
> > > weighting, by the eNodeB, the downlink service data sent to the non-polling terminal via the second weight information $w_{Pdsch}$;
> > >
> > > wherein $w_{\mathrm{Pdsch}} = \mathrm{kron}\left(\mathrm{ones}\left(\dfrac{M}{\mathrm{PortNum}_{\mathrm{csi-rs}}}\right), \mathrm{PMI_i}\right).* w$ ,
> > >
> > > wherein $M$ is a number of antennas in the eNodeB, PortNum$_{\mathrm{csi-rs}}$ is a number of ports for transmitting the CSI-RS, PMI$_i$ is a PMI column vector fed back by an i-th flow of the non-polling terminal, wherein i is a positive integer, $\mathrm{ones}\left(\dfrac{M}{\mathrm{PortNum}_{\mathrm{csi-rs}}}\right)$ is a column vector of $\dfrac{M}{\mathrm{PortNum}_{\mathrm{csi-rs}}}$ ,
> > >
> > > $\mathrm{kron}\left(\mathrm{ones}\left(\dfrac{M}{\mathrm{PortNum}_{\mathrm{csi-rs}}}\right), \mathrm{PMI_i}\right)$ is a Kronecker product of $\mathrm{ones}\left(\dfrac{M}{\mathrm{PortNum}_{\mathrm{csi-rs}}}\right)$
> > >
> > > and PMI$_i$, and $\mathrm{kron}\left(\mathrm{ones}\left(\dfrac{M}{\mathrm{PortNum}_{\mathrm{csi-rs}}}\right), \mathrm{PMI_i}\right).* w$ is a multiplication of the
> > >
> > > $\mathrm{kron}\left(\mathrm{ones}\left(\dfrac{M}{\mathrm{PortNum}_{\mathrm{csi-rs}}}\right), \mathrm{PMI_i}\right)$ and an element of a corresponding position in the w.

2. The method of claim 1, wherein the adjusting, by the eNodeB, the CSI-RS sent to the non-polling terminal according to the first weight information comprises:
weighting, by the eNodeB, the CSI-RS sent to the non-polling terminal via the first weight information.

3. A flow generation apparatus for a time division duplex, TDD, communication system, configured in an evolved node B, eNodeB, in the TDD communication system, comprising:

> a weight module (100), which is configured to generate first weight information based on a received sounding reference signal, SRS, sent by a non-polling terminal, wherein the non-polling terminal is a user terminal having only one uplink antenna to send data;
> a first adjustment module (200), which is configured to adjust a channel state indicator information reference signal, CSI-RS, sent to the non-polling terminal according to the first weight information so that the non-polling terminal feeds back channel quality information based on the CSI-RS; and
> a second adjustment module (300), which is configured to generate second weight information based on the first weight information and the received channel quality information fed back by the non-polling terminal, and adjust downlink service data sent to the non-polling terminal according to the second weight information;
> wherein the channel quality information is precoding matrix indicator, PMI, information;
> wherein the weight module is configured to:

generate uplink channel state information based on the received SRS sent by the non-polling terminal via a main antenna; and

generate the first weight information based on the uplink channel state information;

wherein the uplink channel state information is H; and

wherein the weight module is configured to generate the first weight information based on the uplink channel state information in a following manner:

generating a steering vector $Sv$(theta, phi) of the uplink channel state information H and setting the first weight information to w based on the uplink channel state information H;

wherein $w = Sv$(theta, phi)$^H$, and $Sv$(theta, phi)$^H$ is a Hermite matrix of the steering vector $Sv$(theta, phi); **characterized in that**, the second adjustment module is configured to:

generate the second weight information $w_{Pdsch}$ for adjusting the downlink service data based on the first weight information w and the received PMI information fed back by the non-polling terminal; and

weight the downlink service data sent to the non-polling terminal via the second weight information $w_{Pdsch}$;

wherein

$$w_{\text{Pdsch}} = \text{kron}\left(\text{ones}\left(\frac{M}{\text{PortNum}_{\text{csi-rs}}}\right), \text{PMI}_i\right).*w,$$

wherein $M$ is a number of antennas in the eNodeB, $\text{PortNum}_{\text{csi-rs}}$ is a number of ports for transmitting the CSI-RS, $\text{PMI}_i$ is a PMI column vector fed back by an $i$-th flow of the non-polling terminal, wherein $i$ is a positive integer, $\text{ones}\left(\frac{M}{\text{PortNum}_{\text{csi-rs}}}\right)$ is a column vector of $\frac{M}{\text{PortNum}_{\text{csi-rs}}}$, $\text{kron}\left(\text{ones}\left(\frac{M}{\text{PortNum}_{\text{csi-rs}}}\right), \text{PMI}_i\right)$ is a Kronecker product of $\text{ones}\left(\frac{M}{\text{PortNum}_{\text{csi-rs}}}\right)$ and the $\text{PMI}_i$, and $\text{kron}\left(\text{ones}\left(\frac{M}{\text{PortNum}_{\text{csi-rs}}}\right), \text{PMI}_i\right).* w$ is a multiplication of $\text{kron}\left(\text{ones}\left(\frac{M}{\text{PortNum}_{\text{csi-rs}}}\right), \text{PMI}_i\right)$ and an element of a corresponding position in the w.

4. The apparatus of claim 3, wherein the first adjustment module is configured to:
weight the CSI-RS sent to the non-polling terminal via the first weight information.

5. A computer-readable storage medium, which is configured to store one or more programs executable by one or more processors to implement the flow generation method for a time division duplex, TDD, communication system of any one of claims 1 to 2.

**Patentansprüche**

1. Verfahren zur Stromerzeugung für ein Time-Division-Duplex-(TDD-) Kommunikationssystem, umfassend:

Erzeugen (101) von ersten Gewichtungsinformationen durch einen evolved Node B, eNodeB, basierend auf einem empfangenen, von einem nicht abgefragten Endgerät gesendeten Sounding Reference Signal, SRS, wobei das nicht abgefragte Endgerät ein Benutzerendgerät ist, aufweisend nur eine Uplink-Antenne, um Daten zu senden;

Abstimmen (102) eines an das nicht abgefragte Endgerät gesendeten Channel State Indicator Information Reference Signals, CSI-RS, gemäß den ersten Gewichtungsinformationen durch den eNodeB, sodass das nicht abgefragte Endgerät Kanalqualitätsinformationen basierend auf dem CSI-RS zurücksendet; und

Erzeugen von zweiten Gewichtungsinformationen durch den eNodeB basierend auf den ersten Gewichtungsinformationen und den von dem nicht abgefragten Endgerät zurückgesendeten empfangenen Kanalqualitätsinformationen und Abstimmen von an das nicht abgefragte Endgerät gesendeten Downlink-Dienstdaten gemäß den zweiten Gewichtungsinformationen;

wobei die Kanalqualitätsinformationen Precoding-Matrix-Indicator-(PMI-)Informationen sind;

wobei das Erzeugen der ersten Gewichtungsinformationen durch den eNodeB basierend auf dem von dem nicht abgefragten Endgerät gesendeten SRS Folgendes umfasst:

Erzeugen von Uplink-Kanalzustandsinformationen durch den eNodeB basierend auf dem empfangenen, von dem nicht abgefragten Endgerät über eine Hauptantenne gesendeten SRS; und
Erzeugen der ersten Gewichtungsinformationen durch den eNodeB basierend auf den Uplink-Kanalzustandsinformationen;
wobei die Uplink-Kanalzustandsinformationen H sind; und
wobei das Erzeugen der ersten Gewichtungsinformationen durch den eNodeB basierend auf den Uplink-Kanalzustandsinformationen Folgendes umfasst:

Erzeugen eines Richtungsvektors Sv(Theta, Phi) der Uplink-Kanalzustandsinformationen H durch den eNodeB und Einstellen der ersten Gewichtungsinformationen auf w basierend auf den Uplink-Kanalzustandsinformation H,
wobei w = Sv(Theta, Phi)$^H$ und Sv(Theta, Phi)$^H$ eine Hermitesche Matrix des Richtungsvektors Sv(Theta, Phi) ist;
**dadurch gekennzeichnet, dass** Erzeugen der zweiten Gewichtungsinformationen durch den eNodeB basierend auf den ersten Gewichtungsinformationen und den empfangenen, von dem nicht abgefragten Endgerät zurückgesendeten Kanalqualitätsinformationen und Abstimmen der an das nicht abgefragte Endgerät gesendeten Downlink-Dienstdaten gemäß den zweiten Gewichtungsinformationen Folgendes umfasst:

Erzeugen der zweiten Gewichtungsinformationen $w_{Pdsch}$ durch den eNodeB zum Abstimmen der Downlink-Dienstdaten basierend auf den ersten Gewichtungsinformationen w und den empfangenen, von dem nicht abgefragten Endgerät zurückgesendeten PMI-Informationen; und
Gewichten der an das nicht abgefragte Endgerät gesendeten Downlink-Dienstdaten durch den eNodeB über die zweiten Gewichtungsinformationen $w_{Pdsch}$;
wobei

$$w_{\mathrm{Pdsch}} = \mathrm{kron}\left(\mathrm{Einsen}\left(\frac{M}{\mathrm{PortNum_{csi-rs}}}\right), \mathrm{PMI_i}\right) \cdot * \, w,$$

wobei $M$ eine Anzahl von Antennen in dem eNodeB ist, $\mathrm{PortNum_{csi-rs}}$ eine Anzahl von Ports zum Übertragen des CSI-RS ist, $\mathrm{PMI_i}$ ein von einem $i$-ten Strom des nicht abgefragten Endgeräts zurückgesendeter PMI-Säulenvektor ist, wobei $i$ eine positive ganze Zahl ist, Einsen $\left(\frac{M}{\mathrm{PortNum_{csi-rs}}}\right)$ ein Spaltenvektor von $\frac{M}{\mathrm{PortNum_{csi-rs}}}$, $\mathrm{kron}\left(\mathrm{Einsen}\left(\frac{M}{\mathrm{PortNum_{csi-rs}}}\right), \mathrm{PMI_i}\right)$ ist, ein Kronecker-Produkt von Einsen $\left(\frac{M}{\mathrm{PortNum_{csi-rs}}}\right)$ und $\mathrm{PMI_i}$ ist und $\mathrm{kron}\left(\mathrm{Einsen}\left(\frac{M}{\mathrm{PortNum_{csi-rs}}}\right), \mathrm{PMI_i}\right) \cdot * \, w$ eine Multiplikation von $\mathrm{kron}\left(\mathrm{Einsen}\left(\frac{M}{\mathrm{PortNum_{csi-rs}}}\right), \mathrm{PMI_i}\right)$ und einem Element einer entsprechenden Position in $w$ ist.

2. Verfahren nach Anspruch 1, wobei Abstimmen des an das nicht abgefragte Endgerät gesendeten CSI-RS durch den eNodeB gemäß den ersten Gewichtungsinformationen Folgendes umfasst:
Gewichten des an das nicht abgefragte Endgerät gesendeten CSI-RS durch den eNodeB über die ersten Gewichtungsinformationen.

3. Vorrichtung zur Stromerzeugung für ein Time-Division-Duplex-(TDD-)Kommunikationssystem, ausgelegt in einem evolved Node B, eNodeB, in dem TDD-Kommunikationssystem, umfassend:

ein Gewichtungsmodul (100), das ausgelegt ist, um erste Gewichtungsinformationen basierend auf einem empfangenen, von einem nicht abgefragten Endgerät gesendeten Sounding Reference Signal, SRS, zu erzeugen, wobei das nicht abgefragte Endgerät ein Benutzerendgerät ist, aufweisend nur eine Uplink-Antenne, um Daten zu senden;

ein erstes Abstimmungsmodul (200), das ausgelegt ist, um ein an das nicht abgefragte Endgerät gesendete Channel State Indicator Information Reference Signal, CSI-RS, gemäß den ersten Gewichtungsinformationen abzustimmen, sodass das nicht abgefragte Endgerät Kanalqualitätsinformationen basierend auf dem CSI-RS zurücksendet; und

ein zweites Abstimmungsmodul (300), das ausgelegt ist, um zweite Gewichtungsinformationen basierend auf den ersten Gewichtungsinformationen und den empfangenen, von dem nicht abgefragten Endgerät zurückgesendeten Kanalqualitätsinformationen zu erzeugen und an das nicht abgefragte Endgerät gesendete Downlink-Dienstdaten gemäß den zweiten Gewichtungsinformationen abzustimmen;

wobei die Kanalqualitätsinformationen Precoding-Matrix-Indicator-(PMI-)Informationen sind;

wobei das Gewichtsmodul ausgelegt ist, um:

Uplink-Kanalzustandsinformationen basierend auf dem empfangenen, von dem nicht abgefragten Endgerät über eine Hauptantenne gesendeten SRS zu erzeugen; und

die ersten Gewichtungsinformationen basierend auf den Uplink-Kanalzustandsinformationen zu erzeugen;

wobei die Uplink-Kanalzustandsinformationen H sind; und

wobei das Gewichtungsmodul ausgelegt ist, um die ersten Gewichtungsinformationen basierend auf den Uplink-Kanalzustandsinformationen auf folgende Weise zu erzeugen:

Erzeugen eines Richtungsvektors Sv(Theta, Phi) der Uplink-Kanalzustandsinformationen H und Einstellen der ersten Gewichtungsinformationen auf w basierend auf den Uplink-Kanalzustandsinformationen H;

wobei $w = Sv(Theta, Phi)^H$, und $Sv(Theta, Phi)^H$ eine Hermitesche Matrix des Richtungsvektors Sv(Theta, Phi) ist;

**dadurch gekennzeichnet, dass** das zweite Abstimmungsmodul ausgelegt ist, um:

die zweiten Gewichtungsinformationen $w_{Pdsch}$ zum Abstimmen der Downlink-Dienstdaten basierend auf den ersten Gewichtungsinformationen w und den empfangenen, von dem nicht abgefragten Endgerät zurückgesendeten PMI-Informationen zu erzeugen; und

die an das nicht abgefragte Endgerät gesendeten Downlink-Dienstdaten über die zweiten Gewichtungsinformationen $w_{Pdsch}$ zu gewichten;

wobei

$$w_{\text{Pdsch}} = \text{kron}\left(\text{Einsen}\left(\frac{M}{\text{PortNum}_{\text{csi-rs}}}\right), \text{PMI}_{\text{i}}\right) \cdot * w,$$

wobei M eine Anzahl von Antennen in dem eNodeB ist, $\text{PortNum}_{\text{csi-rs}}$ eine Anzahl von Ports zum Übertragen des CSI-RS ist, $\text{PMI}_{\text{i}}$ ein von einem *i*-ten Strom des nicht abgefragten Endgeräts zurückgesendeter PMI-Säulenvektor ist, wobei *i* eine positive ganze Zahl ist, Einsen $\left(\frac{M}{\text{PortNum}_{\text{csi-rs}}}\right)$ ein Spaltenvektor von $\frac{M}{\text{PortNum}_{\text{csi-rs}}}$ , kron $\left(\text{Einsen}\left(\frac{M}{\text{PortNum}_{\text{csi-rs}}}\right), \text{PMI}_{\text{i}}\right)$ ist, ein Kronecker-Produkt von Einsen $\left(\frac{M}{\text{PortNum}_{\text{csi-rs}}}\right)$ und $\text{PMI}_{\text{i}}$ ist und kron $\left(\text{Einsen}\left(\frac{M}{\text{PortNum}_{\text{csi-rs}}}\right), \text{PMI}_{\text{i}}\right) \cdot * w$ eine Multiplikation von kron $\left(\text{Einsen}\left(\frac{M}{\text{PortNum}_{\text{csi-rs}}}\right), \text{PMI}_{\text{i}}\right)$ und einem Element einer entsprechenden Position in *w* ist.

4. Vorrichtung nach Anspruch 3, wobei das erste Abstimmungsmodul ausgelegt ist, um:
das an das nicht abgefragte Endgerät gesendete CSI-RS über die ersten Gewichtungsinformationen zu gewichten.

5. Computerlesbares Speichermedium, das ausgelegt ist, um ein oder mehrere Programme zu speichern, die von einem oder mehreren Prozessoren ausführbar sind, um das Verfahren zur Stromerzeugung für ein Time-Division-Duplex-(TDD-)Kommunikationssystem nach einem der Ansprüche 1 bis 2 zu implementieren.

**Revendications**

1. Procédé de génération de flux pour un système de communication duplex à répartition dans le temps (DRT), comprenant :

la génération (101), par un nœud B évolué, eNodeB, des premières informations de pondération basées sur un signal de référence de sondage reçu, SRS, envoyé par un terminal non scrutateur, dans lequel le terminal non scrutateur est un terminal utilisateur n'ayant qu'une seule antenne de liaison montante pour envoyer des données ;
l'ajustement (102), par l'eNodeB, d'un signal de référence d'informations d'indicateur d'état de canal, CSI-RS, envoyé au terminal non scrutateur selon les premières informations de pondération, de sorte que le terminal non scrutateur renvoie des informations de qualité de canal basées sur le CSI-RS ; et
la génération, par l'eNodeB, des secondes informations de pondération basées sur les premières informations de pondération et les informations de qualité de canal reçues renvoyées par le terminal non scrutateur, et l'ajustement des données de service de liaison descendante envoyées au terminal non scrutateur en fonction des secondes informations de pondération ;
dans lequel les informations de qualité du canal sont des informations d'indicateur de matrice de précodage, PMI ;
dans lequel la génération, par l'eNodeB, des premières informations de pondération basées sur le SRS reçu envoyé par le terminal non scrutateur comprend :

la génération, par l'eNodeB, des informations sur l'état du canal de liaison montante basées sur le SRS reçu envoyé par le terminal non scrutateur via une antenne principale ; et
la génération, par l'eNodeB, des premières informations de pondération basées sur les informations d'état du canal de liaison montante ;
dans lequel les informations d'état du canal de liaison montante sont H ; et
dans lequel la génération, par l'eNodeB, des premières informations de pondération basées sur les informations d'état du canal de liaison montante comprend :

la génération, par l'eNodeB, d'un vecteur de direction Sv(theta, phi) des informations d'état du canal de liaison montante H et la définition des premières informations de pondération à *w* basées sur des informations d'état du canal de liaison montante H,
dans lequel w = Sv(theta, phi)$^H$, et Sv(theta, phi)$^H$ est une matrice d'Hermite du vecteur de direction Sv(theta, phi) ;
**caractérisé en ce que**, la génération, par l'eNodeB, des secondes informations de pondération basées sur les premières informations de pondération et les informations de qualité de canal reçues renvoyées par le terminal non scrutateur, et
l'ajustement des données de service de liaison descendante envoyées au terminal non scrutateur en fonction des secondes informations de pondération comprend :

la génération, par l'eNodeB, des secondes informations de pondération $w_{Pdsch}$ pour l'ajustement des données de service descendantes basées sur des premières informations de pondération *w* et des informations PMI reçues renvoyées par le terminal non scrutateur ; et
la pondération, par l'eNodeB, des données de service de liaison descendante envoyées au terminal non-scrutateur via les secondes informations de pondération $w_{Pdsch}$;
dans lequel

$$w_{\mathrm{Pdsch}} = \mathrm{kron}\left(\mathrm{ones}\left(\frac{M}{\mathrm{PortNum_{csi-rs}}}\right), \mathrm{PMI_i}\right) \cdot * \, w,$$

dans lequel *M* est un nombre d'antennes dans l'eNodeB, PortNum$_{csi-rs}$ est un nombre de ports pour transmettre le CSI-RS, PMI$_i$ est un vecteur colonne PMI renvoyé par un *i*-ème flux du terminal non scrutateur, dans lequel *i* est un entier positif, ones $\left(\frac{M}{\mathrm{PortNum_{csi-rs}}}\right)$ est un vecteur colonne de

$$\frac{M}{\mathtt{PortNum_{csi-rs}}}, \mathtt{kron}\left(\mathtt{ones}\left(\frac{M}{\mathtt{PortNum_{csi-rs}}}\right), \mathtt{PMI_i}\right) \text{ est un produit de Kronecker de}$$

$\mathtt{ones}\left(\frac{M}{\mathtt{PortNum_{csi-rs}}}\right)$ et PMI$_i$, et $\mathtt{kron}\left(\mathtt{ones}\left(\frac{M}{\mathtt{PortNum_{csi-rs}}}\right), \mathtt{PMI_i}\right) \cdot * w$ est

une multiplication de $\mathtt{kron}\left(\mathtt{ones}\left(\frac{M}{\mathtt{PortNum_{csi-rs}}}\right), \mathtt{PMI_i}\right)$ et d'un élément d'une position correspondante dans le *w*.

**2.** Procédé selon la revendication 1, dans lequel l'ajustement, par l'eNodeB, du CSI-RS envoyé au terminal non scrutateur en fonction des premières informations de pondération comprend :
la pondération, par l'eNodeB, du CSI-RS envoyé au terminal non scrutateur via les premières informations de pondération.

**3.** Appareil de génération de flux pour un système de communication duplex à répartition dans le temps (DRT), configuré dans un nœud B évolué (eNodeB) dans le système de communication DRT, comprenant :

un module de pondération (100), qui est configuré pour générer des premières informations de pondération basées sur un signal de référence de sondage reçu, SRS, envoyé par un terminal non scrutateur, dans lequel le terminal non scrutateur est un terminal utilisateur n'ayant qu'une seule antenne de liaison montante pour envoyer des données ;

un premier module d'ajustement (200), qui est configuré pour ajuster un signal de référence d'informations d'indicateur d'état de canal, CSI-RS, envoyé au terminal non scrutateur en fonction des premières informations de pondération de sorte que le terminal non scrutateur renvoie des informations de qualité de canal basées sur le CSI-RS ; et

un second module d'ajustement (300), qui est configuré pour générer des secondes informations de pondération basées sur des premières informations de pondération et des informations de qualité de canal reçues renvoyées par le terminal non scrutateur, et ajuster les données de service de liaison descendante envoyées au terminal non scrutateur en fonction des secondes informations de pondération ;

dans lequel les informations de qualité du canal sont des informations d'indicateur de matrice de précodage, PMI ;
dans lequel le module de pondération est configuré pour :

générer des informations sur l'état du canal de liaison montante basées sur le SRS reçu envoyé par le terminal non scrutateur via une antenne principale ; et
générer des premières informations de pondération basées sur les informations d'état du canal de liaison montante ;
dans lequel les informations d'état du canal de liaison montante sont H ; et
dans lequel le module de pondération est configuré pour générer les premières informations de pondération basées des informations d'état du canal de liaison montante de la manière suivante :

la génération d'un vecteur de direction *Sv*(theta, phi) des informations d'état du canal de liaison montante H et la définition des premières informations de pondération à *w* basées sur des informations d'état du canal de liaison montante H ;
dans lequel *w* = Sv(theta, phi)$^H$, et Sv(theta, phi)$^H$ est une matrice d'Hermite du vecteur de direction Sv(theta, phi) ;
**caractérisé en ce que** le second module d'ajustement est configuré pour :

générer des secondes informations de pondération $w_{Pdsch}$ pour l'ajustement des données de service descendantes basées des premières informations de pondération w et des informations PMI reçues renvoyées par le terminal non scrutateur ; et
pondérer des données de service de liaison descendante envoyées au terminal non-scrutateur via les secondes informations de pondération $w_{Pdsch}$;
dans lequel

$$w_{\mathtt{Pdsch}} = \mathtt{kron}\left(\mathtt{ones}\left(\frac{M}{\mathtt{PortNum_{csi-rs}}}\right), \mathtt{PMI_i}\right) \cdot * w,$$

dans lequel *M* est un nombre d'antennes dans l'eNodeB, PortNum$_{csi-rs}$ est un nombre de ports pour transmettre le CSI-RS, PMI$_i$ est un vecteur colonne PMI renvoyé par un *i*-ème flux du terminal non scrutateur, dans lequel *i* est un entier positif, $\text{ones}\left(\frac{M}{\text{PortNum}_{csi-rs}}\right)$ est un vecteur colonne de $\frac{M}{\text{PortNum}_{csi-rs}}$, $\text{kron}\left(\text{ones}\left(\frac{M}{\text{PortNum}_{csi-rs}}\right), \text{PMI}_i\right)$ est un produit de Kronecker de $\text{ones}\left(\frac{M}{\text{PortNum}_{csi-rs}}\right)$ et PMI$_i$, et $\text{kron}\left(\text{ones}\left(\frac{M}{\text{PortNum}_{csi-rs}}\right), \text{PMI}_i\right) \cdot * w$ est une multiplication de kron $\left(\text{ones}\left(\frac{M}{\text{PortNum}_{csi-rs}}\right), \text{PMI}_i\right)$ et d'un élément d'une position correspondante dans le *w*.

4. Appareil selon la revendication 3, dans lequel le premier module d'ajustement est configuré pour :
pondérer le CSI-RS envoyé au terminal non scrutateur via les premières informations de pondération.

5. Support de stockage lisible par ordinateur, qui est configuré pour stocker un ou plusieurs programmes exécutables par un ou plusieurs processeurs pour mettre en œuvre le procédé de génération de flux pour un système de communication duplex à répartition dans le temps, DRT, selon l'une quelconque des revendications 1 à 2.

An eNodeB generates first weight information based on a received SRS sent by a non-polling terminal
101

The eNodeB adjusts a CSI-RS sent to the non-polling terminal according to the first weight information, so that the non-polling terminal feeds back channel quality information based on the CSI-RS
102

The eNodeB generates second weight information based on the first weight information and the received channel quality information fed back by the non-polling terminal, and adjusts downlink service data sent to the non-polling terminal according to the second weight information
103

**FIG. 1**

An eNodeB generates first weight information based on a received SRS sent by a non-polling terminal
201

The eNodeB adjusts a CSI-RS sent to the non-polling terminal according to the first weight information, so that the non-polling terminal feeds back channel quality information based on the CSI-RS
202

The eNodeB generates second weight information based on the first weight information and the received channel quality information fed back by the non-polling terminal, and adjusts downlink service data sent to the non-polling terminal according to the second weight information
203

**FIG. 2**

```
  ┌─100            ┌─200              ┌─300
  │                │                  │

┌──────────┐    ┌──────────┐    ┌──────────┐
│          │    │  First   │    │  Second  │
│  Weight  │────│adjustment│────│adjustment│
│  module  │    │  module  │    │  module  │
│          │    │          │    │          │
└──────────┘    └──────────┘    └──────────┘
```

**FIG. 3**

┌─────────────────────────────────────────┐
│ An eNodeB generates uplink channel state  │   501
│ information H based on a received SRS sent by a non- │
│ polling terminal via a main antenna       │
└─────────────────────────────────────────┘

┌─────────────────────────────────────────┐
│                                           │   502
│ The eNodeB sets the first weight information to w │
│ based on the uplink channel state information H │
│                                           │
└─────────────────────────────────────────┘

┌─────────────────────────────────────────┐
│   The eNodeB maps a port15 of a CSI-RS to M/2 │
│ antennas numbered with odd numbers, and maps a │
│ port16 to M/2 antennas numbered with even numbers; │  503
│   the eNodeB weights the CSI-RS transmitted by the │
│     port15 via an odd dimension of the first weight │
│ information w, and weights the CSI-RS transmitted │
│     by the port16 via an even dimension of the first │
│ weight information w; and the eNodeB sends the CSI- │
│           RS to the non-polling terminal  │
└─────────────────────────────────────────┘

┌─────────────────────────────────────────┐
│   The eNodeB generates second weight information │
│ $W_{pdsch}$ for adjusting downlink service data based on │   504
│   the first weight information w and the received PMI │
│ information fed back by the non-polling terminal; and │
│ the eNodeB weights the downlink service data sent to │
│     the non-polling terminal via the second weight │
│             information $W_{pdsch}$        │
└─────────────────────────────────────────┘

**FIG. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CMCC**. Further evaluations of UE-specific beamformed CSI-RS. *3GPP DRAFT; R1-154302, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX; FRANCE*, 23 August 2015, vol. RAN WG1 (Beijing)
- **HUAWEI et al.** Discussion on reciprocity based CSI acquisition mechanism. *3GPP DRAFT; R1-1708137, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX; FRANCE*, 14 May 2017, vol. RAN WG1 (Hangzhou)
- **CMCC**. Considerations on hybrid non-precoded CSI-RS and beamformed CSI-RS. *3GPP DRAFT; R1-164880, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX; FRANCE*, 13 May 2016, vol. RAN WG1
- **SAMSUNG**. Discussions on tradeoff of CSI-RS and feedback enhancement. *3GPP DRAFT; R1-152882 FD-MIMO CSI ENHANCEMENT, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX; FRANCE*, 15 May 2015, vol. RAN WG1 (Fukuoka)
- **ZTE**. Non-Constant Modulus Beamforming based on Class B CSI reporting. *3GPP DRAFT; R1-155271 NON-CONSTANT MODULUS BEAMFORMING BASED ON CLASS B CSI REPORTING, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX; FRANCE*, 04 October 2015, vol. RAN WG1 (Malmo)